# EUROPEAN PATENT APPLICATION

(11) **EP 1 291 795 A1**
(43) Date of publication of application: **12.03.2003**
(21) Application number: 01930101.9
(22) Date of filing: 14.05.2001
(51) Int. Cl.: G06F 17/60

(54) **PRODUCTION STATE PRESENTING SYSTEM**

(30) Priority: 08.06.2000 JP 2000172327
(71) Applicant: DAI NIPPON PRINTING CO., LTD., Tokyo 162-0062 (JP)
(72) Inventor: KANATANI, Keisuke, C/O DAI NIPPON PRINTING CO. LTD, Tokyo 162-0062 (JP); USUI, Michiro, C/O DAI NIPPON PRINTING CO., LTD, Tokyo 162-0062 (JP); MINAMI, Yoshinobu, C/O DAI NIPPON PRINTING CO. LTD, Tokyo 162-0062 (JP)
(74) Representative: VOSSIUS & PARTNER
(86) International application number: JP0103980
(87) International publication number: WO01095180

(57) **Abstract**

In the manufacturing status indicating system according to the present invention, an order receiving control system, a manufacture control system, and a process control system are built up by a host system (10), a network (20), and information terminals (30), and data relating to photomasks inputted by these systems are sent to the host system (10). The host system (10) coordinates and summarizes these data and turns the data to database for each purchaser and for each order number and registers the data in DB (12). Based on DB (12), a server (11) prepares a home page to be offered to a browser device (5) on the purchaser side. When access is made from the browser device (5) on the purchaser side using an authorization key, the home page is offered. When this manufacturing status indicating system is applied to the manufacture of photomasks, various types of information relating to the manufacture of photomasks are offered to the purchasers at all times and at real time. This makes it possible to contribute to higher efficiency of the manufacture of photomasks and to more efficient production of semiconductor devices on the purchaser side.

## Description

### FIELD OF THE INVENTION

The present invention relates to a system for indicating the current manufacturing status of ordered products via communication network to customers, who placed orders on the products.

### BACKGROUND ART

In the manufacturing industry, it is generally practiced to estimate delivery time by setting up the schedule when an order is received to manufacture products so that the products can be delivered at the designated delivery time. Sometimes, the delivery time may not be complied due to unavoidable reason. In such case, the change of the delivery time must be notified to the customer via communication means such as telephone, facsimile, or E-mail. In some cases, the delivery time is designated not only to the date but precisely to the time of delivery. Also, delivery time is sometimes several days at the longest, or, in the shortest case, about one day. An example of such manufacture of products is the manufacture of photomasks. Brief description will be given on the manufacture of photomasks.

Semiconductor circuits such as LSI, IC, memory, etc. have 3-dimensional structures. In the manufacture of these products, the 3-dimensional circuit pattern is divided into several layers, and photomask is prepared for each of these layers. It is not very unusual that the number of these layers is as many as 20 or 30.

The manufacturer of photomasks receives order to manufacture photomasks with these layers from the manufacturers of semiconductor products. The data for the circuit patterns of all layers are not necessarily offered at one time. In some cases, circuit pattern is given for each of the layers one by one, or it may be given for several layers each time.

When the data for the circuit pattern are provided, the photomask manufacturer writes the circuit pattern on a glass substrate where resist is coated using an electron beam lithography device. Photomasks having predetermined circuit pattern are manufactured by photolithography and the products are delivered to the semiconductor manufacturer. Upon delivery of the photomasks, the semiconductor manufacturer immediately starts trial production of semiconductor device using the photomasks. Therefore, if the delivery of the photomasks is delayed, the trial production line of the semiconductor products may be stopped.

However, the photomasks are not s type of product, which can be manufactured and delivered by simple procedure. The products must be inspected and checked whether or not they comply with the quality as requested by the customer. Also, it is sometimes necessary to correct the circuit pattern. For this reason, prior to the delivery of the photomasks, there are various processes of manufacture and inspection. It is started from the coating of resist to glass substrate, to writing of circuit pattern by exposure, and to other processes of photolithography. After the photomasks have been manufactured, there are the processes of various types of inspection, and finally, shipping inspection must be performed.

In the correction of circuit pattern, there are dark defect correction and white defect correction. Dark defect correction is a process to eliminate excessive metal thin film remaining on the photomask. White defect correction means that, when there is defect on the metal film to form the circuit pattern, metal is buried into the defect. The correction procedure is already known in the art.

As described above, there are many processes until the photomasks are produced by the photomask manufacturer and are delivered to the customer. This means that much time is required for the manufacture and the inspection of the photomasks, and delivery time may be delayed sometimes. If the delivery time is delayed, trial production line or semiconductor product manufacturing line may have to be stopped at the semiconductor manufacturer. In such case, the photomask manufacturer must inform the customer the date and the time of the delayed delivery time. As a result, the semiconductor manufacturer rearranges the production line and continues the trial production and the manufacture of other semiconductor products.

In the past, however, the communication of the delivery time has been generally made via telephone, facsimile, or E-mail. This means that much labor and time are required for the communication, and some discrepancy or communication crossing may occur between the photomask manufacturer and the semiconductor manufacturer. Specifically, manufacture line and inspection line of photomasks are in operation for 24 hours, and trial production line and manufacture line of the semiconductor products at the customers are also in operation for 24 hours. For this reason, communication on the delay of delivery time may have to be given late at night sometimes. In such case, more time may be required for communication, or discrepancy may occur.

In the above, description has been given on the manufacture of photomasks, while the same problem may occur in the manufacture of the other types of products.

It is an object of the present invention to provide a manufacturing status indicating system, by which it is possible to achieve higher manufacturing efficiency in the manufacture of photomasks and to contribute to higher production efficiency at the customers. This can be accomplished by providing the following information, for instance: At which process the ordered products are at present? What kind of inspection has been performed on the products and how was the result? At which date and time the products are to be delivered? These data on the manufacturing status of the products are offered to the customers at all times and at real time.

### DISCLOSURE OF THE INVENTION

The manufacturing status indicating system according to the present invention comprises a host system for turning data to database and for placing the data under control and storing data, said data being related to ordered products as inputted by an order receiving control system, a manufacture control system, and a process control system; and
a server for preparing pages to indicate information to be offered to a purchaser based on said database.

The present invention also provides the manufacturing status indicating system as described above, wherein said server is provided with authorization function to recognize an authorization key, and, when access is made from the browser device by using the authorization key, the server generates an information to be offered to a browser device as a home page based on elements contained in the authorization key.

### BRIEF DESCRIPTION OF THE DRAWINGS

Fig. 1 is a block diagram showing an embodiment of a manufacturing status indicating system according to the present invention;
Fig. 2 shows an example of a front page of home page when access is made from a customer using a browser device in case the manufacturing status indicating system of the present invention is applied for the presentation of the information on the current manufacturing status of photomasks.
Fig. 3 is a front page as shown in Fig. 2. It shows an example of a page to search the photomask, which is to be indicated by a server 11 to a browser device 5 when a clickable map such as "report on delivery time of photomask", "photomask current status information", or "photomask shipping information" is selected.
Fig. 4 is a table showing a page to indicate delivery time information of the photomask.
Fig. 5 is a table showing an example of a page to indicate information of current in-process work in the manufacture of photomask;
Fig. 6 is a table showing an example of a page to indicate detailed current status information of the photomask;
Fig. 7 is a table showing an example of a page to indicate shipping information of the photomask; and
Fig. 8 shows an example of a page to indicate mailing function in the manufacturing status indicating system.

### BEST MODE FOR CARRYING OUT THE INVENTION

Detailed description will be given below on embodiments of the present invention referring to the drawings. In the embodiments given below, the manufacturing status indicating system of the present invention will be described in case it is applied for the presentation of the information on the current manufacturing status of photomask.

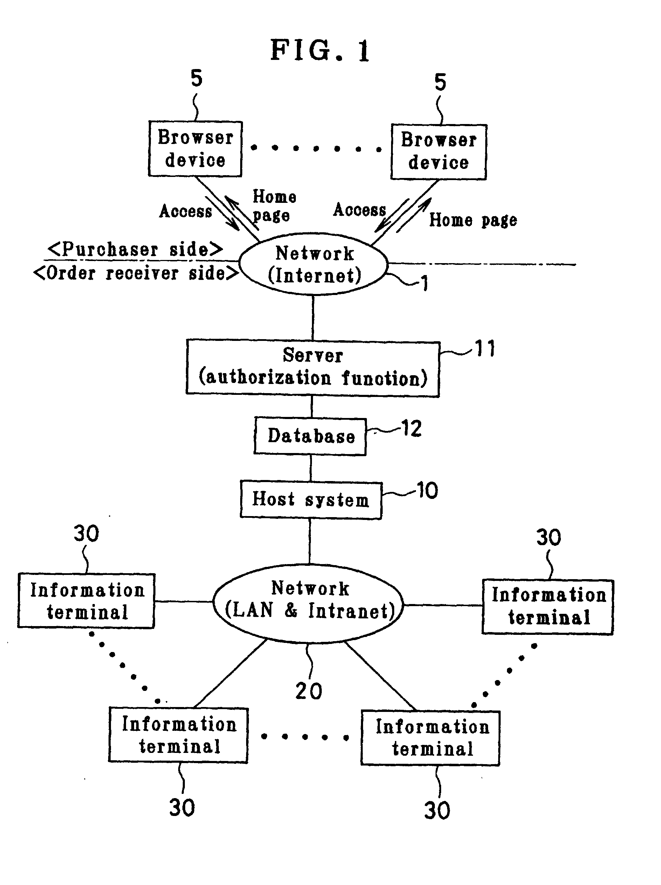

Fig. 1 is a block diagram showing an embodiment of a manufacturing status indicating system according to the present invention. In the figure, reference numeral 1 denotes a network, 5 a browser device, 10 a host system, 11 a server, 12 a database (hereinafter referred as "DB"), 20 a network, and 30 an information terminal.

In Fig. 1, the network 1 is a wide area network, which is built up using various types of circuits. Here, it is supposed to be Internet. In Fig. 1, at the position of the network 1, a boundary shown by one-dot chain line is defined. The portion above this boundary shows the system on purchaser side, and the portion under the boundary represents the system on order receiver side. In this case, the purchaser is a manufacturer of semiconductor products, and the order receiver is a manufacturer of photomasks.

The system on the purchaser side comprises browser devices 5, and these are connected to the network 1 via protocol of Internet. As the browser device 5, a personal computer installed with a predetermined browser software, e.g. www browser software, may be used. Therefore, as the browser devices 5, general environment connected to Internet and used for reading the home pages by browser should be prepared.

Accordingly, a person in charge on the purchaser side can take a view on the current manufacturing status of the ordered photomasks by gaining access to the system on the order receiver side as to be described later. It is designed in such manner that nobody is allowed for viewing the manufacturing status to be indicated by the manufacturing status indicating system, but only the person in charge on the purchaser side is entitled to read the information. An authorization key is distributed to the persons in charge on the purchaser side and it gives the authorization to read from the order receiver. Therefore, the person in charge on the purchaser side can have access to the system on the order receiver side by importing the authorization key given by the order receiver to the browser device 5.

The authorization key contains the following elements: an element (information) to determine the scope of information to be offered as home page to the browser device 5 of the person in charge on the purchaser side, and an element (information) to recognize the person in charge on the purchaser side when the person in charge on the purchaser side gives instruction or asks question by the mailing function, which will be described later. These elements include, for instance, membership number.

Specifically, on the purchaser side, there are sections such as memory section, custom LSI section, individual semiconductor section, etc. for each operation unit. Persons in charge are assigned to each of these sections, and order may be placed directly from the persons in charge of these sections. In some cases, orders for photomasks are unified by assigning some specialists for material procurement section, who place orders to the photomask manufacturer upon request from the persons in charge of the sections for the ordering of photomasks. As described above, there are various modes of the ordering for photomask. In any way, the manufacturing status of photomasks for memory should be indicated to the person in charge in the memory section, and it is meaningless to indicate the manufacturing status of photomask for the other components. However, when the ordering on photomasks is unified, it is necessary to indicate the manufacturing status of all types of photomasks to the person in charge, who placed this order.

In this respect, the scope of the information to be offered is determined according to the elements contained in the authorization key, i.e. which scope of the information should be offered to the person in charge of the authorization key, or whether the manufacturing status of all types of photomasks should be offered, or only the manufacturing status of the photomasks for memory should be offered.

The address of the destination of E-mail is as given below. As to be described later, in the information to be offered to the person in charge on the purchaser side, there is provided mailing function, by which instruction, confirmation, question, etc. can be given by E-mail from the person in charge on the purchaser side to the order receiver. The contents of the E-mail are divided to four categories: delivery time information, engineering information, quality information, and other information. Therefore, the E-mail of the question relating to delivery time must be transmitted to the person in charge of delivery time. Instruction or question regarding the engineering matters must be transmitted to the person in charge of engineering matters. Accordingly, the destination of E-mail should be determined in advance according to the category of the contents of the E-mail when the person in charge on the purchaser side sends E-mail.

On the other hand, the manufacturing status indicating system on the order receiver side comprises a network system, a DB 12, and a server 11. This network system comprises information terminals 30 and a host system 10 connected by a network 20. The information terminals 30 are provided in each of the sections such as business operation, production planning, or process control at the photomask manufacturing factory, and also, in each of the processes such as manufacturing and inspection.

As the network 20, an adequate LAN (Local Area Network) may be used, or Intranet utilizing the Internet technology may be used. Here, it is assumed that LAN and Intranet are simultaneously used in the network 20.

As the system, which comprises the information terminals 30 and the host system 10 connected via the network 20, there are an order receiving control system, a manufacture planning system, a process control system, etc. The order receiving control system, the manufacture planning system, and the process control system are the systems widely adopted among the manufacturers, and these will be described later.

The host system 10 comprises a large-size computer system, and the information terminals also comprise adequate types of computer systems such as personal computers. In particular, the information terminals 30 for the manufacturing process and the inspection process are provided with bar code readers (not shown).

The server 11 is connected to the network 1 via Internet protocol. The server 11 is provided with programs, by which DB 12 gives instructions to prepare each picture of home page by summarizing the information to be offered to the persons in charge on the purchaser side based on the stored data. Based on the program, the pictures of home pages to be offered to each of the persons in charge on the purchaser side are prepared. Description will be given later on DB 12.

The server 11 is provided with authorization function to recognize the authorization key. When access is made from the browser device 5 by using the authorization key, the information to be offered as home page is prepared according to the elements contained in the authorization key and it is offered to the browser device 5. Further, when the above E-mail has been transmitted from the browser device 5, the server 11 delivers the E-mail to DB 12. Then, the E-mail is transmitted to the information terminal 30 of the destination address given in the E-mail sent from DB 12 to the host system 10.

Although not shown in Fig. 1, a fire wall is provided between the server 11 and DB 12 so that access cannot be made from outside via the network 1 to DB 12, the host system 10, and the information terminals 30.

Next, description will be given as to which data are accumulated in DB 12 and how. First, a person in charge of business operation at the order receiver side receives an order on the manufacture of photomask. When the order is received, the person in charge of business operation starts the order receiving control system by using the information terminal 30 and inputs order number, product name, process name, and control number of the ordered photomasks. Then, these inputted data are set to the host system 10. The product name is also called series name, and the process name is also called layer I.D. or process code.

The host system 10 controls these data for each purchaser and for each order number and stores them. As to be described later, various data are inputted to one photomask by the order receiving control system, the manufacture planning system, the process control system, etc. The host system 10 coordinates the data inputted from the order receiving control system, the manufacture planning system, the process control system, etc. and places these data under control and stores them for each purchaser and for each item, e.g. for each order number. Here, it is supposed now that the host system 10 coordinates and summarizes these data for each purchaser and for each order number.

When data of the circuit pattern formed on the photomask are offered from the purchaser side, the person in charge inputs the date of receiving of the data of the circuit pattern by the order receiving control system. In this case, it is normally practiced that delivery time is requested from the purchaser, and the delivery destination, lot number, etc. of the photomask are designated. The person in charge also inputs the requested delivery date, delivery destination, and lot number from the information terminal 30. These data are also sent to the host system 10 and are stored. As described above, Intranet is simultaneously used in the network 20. The information relating to the photomask is searched from Intranet using the order number, the control number, etc. Then, date of supply of circuit pattern, the requested delivery date, delivery destination, and lot number of the circuit pattern should be inputted.

When the data of the circuit pattern is supplied as described above, the person in charge of the manufacture planning takes into consideration the matters such as current status on the manufacture line and the inspection line, the time required for transportation from the photomask manufacturing factory to the delivery destination, etc. and sets up the schedule to match the requested delivery time. The scheduled shipping data, the delivery date at the destination as designated by the purchaser are determined, and the scheduled shipping data and the expected delivery time at the destination are inputted from the information terminal 30. These data are inputted by using the manufacture planning system. For the input of these data, too, the information relating to the photomask is searched using order number, control number, etc. by Intranet, and the scheduled shipping data and the expected delivery date at the destination should be inputted. These data are then sent to the host system 10 and are stored.

Normally, the schedule for the manufacture and the inspection are looked over again and reconsidered regularly. For instance, if an order for a photomask has been received, which has very short delivery time, this photomask must be forcibly put into the manufacturing process or the inspection process currently in running. In such case, the schedule should be rearranged. If a defective product is found in the inspection process, and much time is required for the correction of the defect or the product has serious defect, it must be re-manufactured. In such case, also, the schedule must be rearranged. Because such situation may happen sometimes, the schedule should be looked over and rearranged regularly. If the scheduled shipping date or the expected delivery time at the destination has been changed, the person in charge inputs the new scheduled shipping date and the expected delivery time at the destination by using the manufacture planning system.

Based on the planned schedule, the person in charge of the manufacture planning determines the sequence of the in-process work in each of the manufacturing process and the inspection process. Specifically, it is generally practiced that a plurality of photomasks are pooled in waiting for the in-process work in each of the manufacturing process and the inspection process. It should be determined in which order these photomasks are to be processed. Then, the sequence of the in-process work in the manufacturing process and the inspection process is notified to the information terminals 30 positioned in the manufacturing process and the inspection process. The notification of the sequence of the in-process work in the manufacturing process and the inspection process is inputted by the person in charge of the manufacture planning by means of the manufacture planning system using the information terminal 30, and this is transmitted to the information terminals 30 positioned at the manufacturing process and the inspection process.

When the data of the circuit pattern is supplied, the manufacture of the photomasks is started. A glass substrate is prepared, and this glass substrate is placed in a sealed container. On the sealed container, a bar code indicating the information such as order number, product name, process name, control number, etc. of the photomask is attached. It is arbitrarily determined how many items of information should be contained in the bar code.
However, it is the matter of course that at least such information enough to specify the photomask should be contained. In the following, the glass substrate placed in the sealed container is merely called as a "member" to facilitate the explanation.

In each of the manufacturing processes and the inspection processes, the person in charge of each process reads the bar code by using a bar code reader of the information terminal 30 by means of the process control system to find the information such as: when the member enters the process, when in-process work is started, when the in-process work is completed, and when it is advanced to the next process. When the data inputted from the bar code reader is received, the information terminal 30 transmits the data of the bar code to the host system 10 together with the time when it was inputted. The host system 10 stores the data.

In the meantime, there is a process called "dimension" in the inspection process. In this inspection process called "dimension", coordinate values of the position designated by the purchaser and the dimensions of the designated portion are measured on the circuit pattern formed on the glass substrate. The coordinate values and the dimensions measured are inputted from the information terminal 30. For the measurement of the coordinates, a position to serve the origin is determined by the purchaser.

The coordinate values and the dimensions measured in the inspection process are also inputted by using the process control system. The inputted data of the coordinates and the dimensions are sent to the host system 10 and are stored. As described above, when the in-process work is performed in the inspection process of the dimensions, the bar code of the member is read. The host system 10 recognizes that the data of these coordinate values and the dimensions are the data relating to the photomask represented by the bar code.

In the inspection process, there is a process to inspect whether there is stain or dust in the formed circuit pattern, or whether there is defect in the circuit pattern, or whether the circuit pattern is correctly formed. This inspection process is called "visual inspection". In the process of the visual inspection of external view of the product, the circuit pattern is photographed using optical microscope attached with TV camera. Then, it is displayed on a display unit such as CRT, and the circuit pattern is visually examined to check whether stain or dust is present or not, or whether there is defect on the circuit pattern or not. The person in charge incorporates the image of the circuit pattern photographed using the optical microscope with TV camera into the information terminal 30 as digital data. The incorporation of the image data of the circuit pattern is also performed by using the process control system. The incorporated image data of the circuit pattern is sent to the host system 10 and is stored. In the same manner as described above, the host system 10 recognizes that the image data is the data relating to the photomask represented by the bar code, which has been read in the in-process work of the process of "visual inspection".

As described above, the person in charge of business operation and the person in charge of the manufacture planning on the order receiver side can examine the circuit pattern photographed in the process of visual inspection, or which member is in which process currently, or which process has been completed at what time on what day, or how are the coordinate values and the dimensions measured in the process of dimension. In this case, the information as to which process has been completed at what time and on what day is important for setting up the schedule of the manufacture planning because it is possible to determine whether the schedule should be changed or not according to this information.

In this way, various data are inputted to the host system 10 by using the order receiving control system, the manufacture planning system, the process control system, etc. The data inputted by using these systems are coordinated and summarized and are then controlled for each purchaser and for each order number and are stored. Based on these stored data, database is prepared for each purchaser and for each order number, and this database is registered in DB 12.

Then, based on the content of DB 12, the server 11 summarizes the information to be offered to each person in charge of each purchaser and prepares pictures of the home page. Description will be given below on the pictures of the home page.

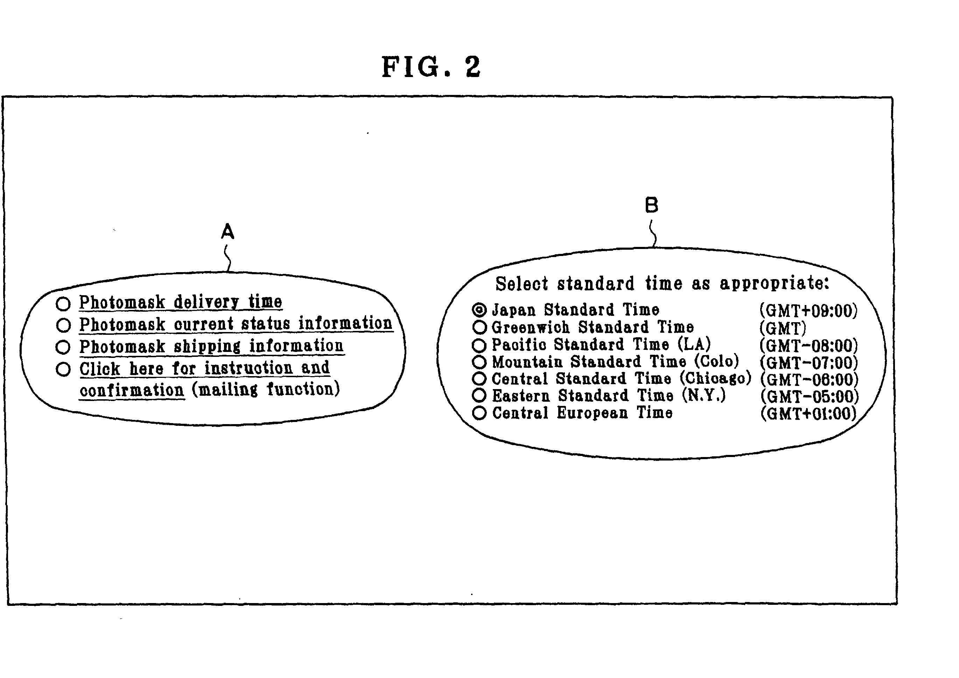

When access is made from the browser device 5 of a purchaser using the authorization key, the server 11 interprets the authorization key. Based on the elements contained in the authorization key, it is judged which purchaser it is, or which scope of information should be offered to the person in charge. Then, the front page of the home page is transmitted to the browser device 5 to present it. Fig. 2 shows an example of a picture of the front page. In the pictures as given in the following description, title bar, menu bar, and task bar are not given. Also, the underlined characters indicates that each block is a clickable map.

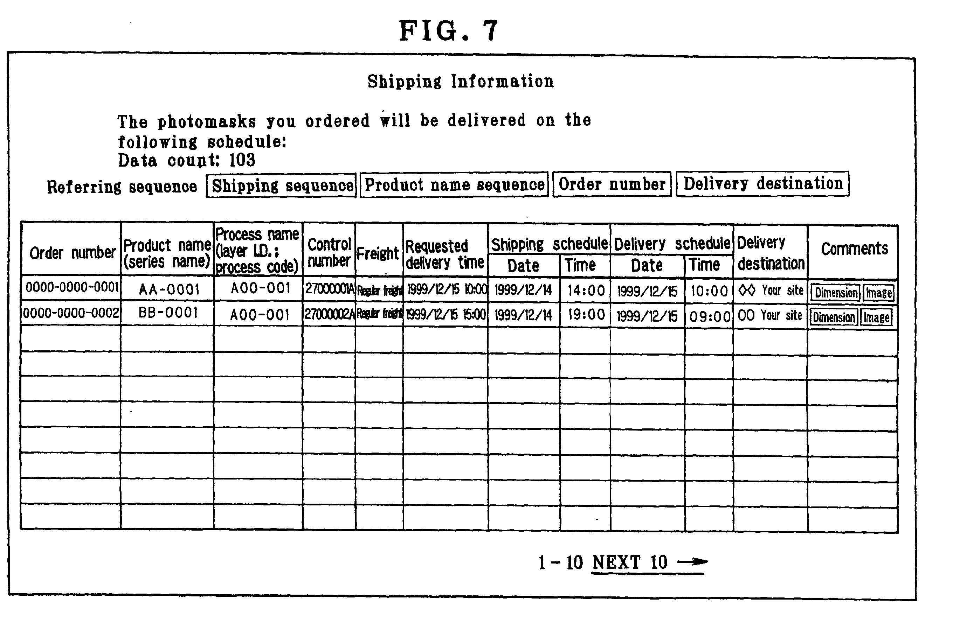

In this manufacturing status indicating system, report on photomask delivery time, current status information, and shipping information are indicated. It is provided with mailing function to give instruction, to confirm and to ask question from the purchaser to the order receiver. In this respect, as shown in Fig. 2 A, four clickable maps are arranged: "report on photomask delivery time", "photomask current status information", "photomask shipping information", and "click here for instruction and confirmation". Even when the purchaser is a domestic dealer, delivery destination may be in foreign country. In this respect, as shown on the front page picture of Fig. 2, the standard time data are given so that the standard time at each place to indicate date and time can be selected by radio box as shown in Fig. 2 B. In Fig. 2, 7 different standard times are shown, while it is needless to say that the other standard time may be prepared. In this case, it is supposed now that Japan Standard Time has been selected as shown in Fig. 2. If Greenwich Standard Time is selected, the date and the time on the following pages are displayed in Greenwich Standard Time.

Although not shown in Fig. 2, the purchaser is not limited to domestic semiconductor manufacturer and it may be a foreign manufacturer. In this respect, it may be designed in such manner that the language used can be selected on the display.

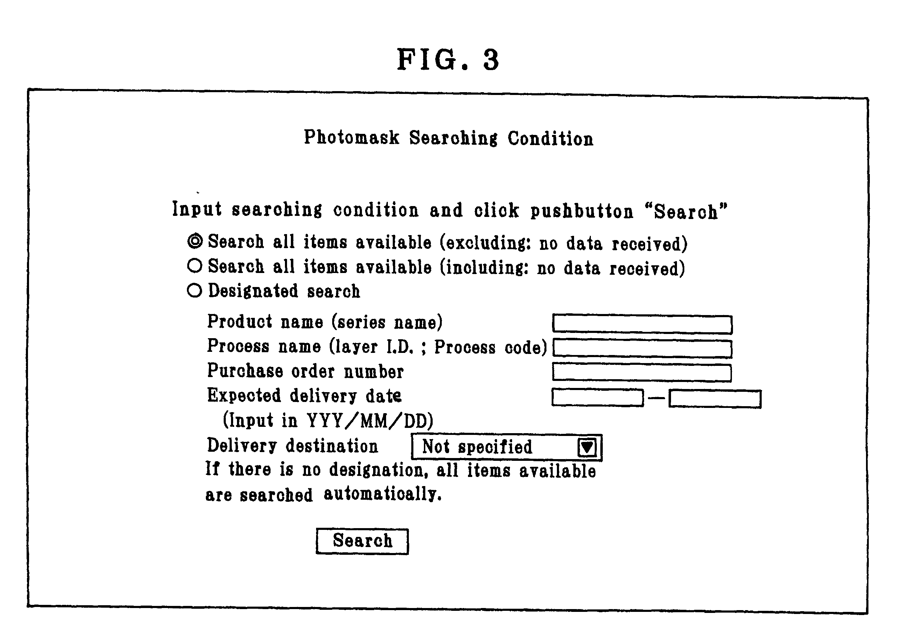

When the column "photomask shipping and delivery information" on the front page of Fig. 2 is clicked by the browser device 5 on the purchaser side, this information is sent from the browser device 5 to the server 11. To cope with this, the server 11 sends the picture of the page "photomask shipping and delivery information" to the browser device 5. First of all, a page is offered, which is useful for selection and searching of photomask delivery time information, which the person in charge of the purchaser side wants to read. Fig. 3 shows an example of such page.

On the page of the photomask searching condition, searching can be performed on the photomask, for which the person in charge wants to know the delivery time information. It can be searched by inputting the conditions such as product name or series name, process name or layer I.D. or process code, order number, expected delivery time at the destination, and the delivery destination. Naturally, it is possible to search all items available. Therefore, the person in charge on the purchaser side inputs the desired condition on this page. By selecting and clicking the button for "Search", it is possible to find the delivery time information of the photomask as desired. In Fig. 3, "delivery destination" can be selected form the name of destinations inputted in the past using combo box.

As to be described later, the page of photomask searching condition as shown in Fig. 3 is also displayed when the clickable maps of "photomask current status information", or "photomask shipping information" is selected on the front page of Fig. 2.

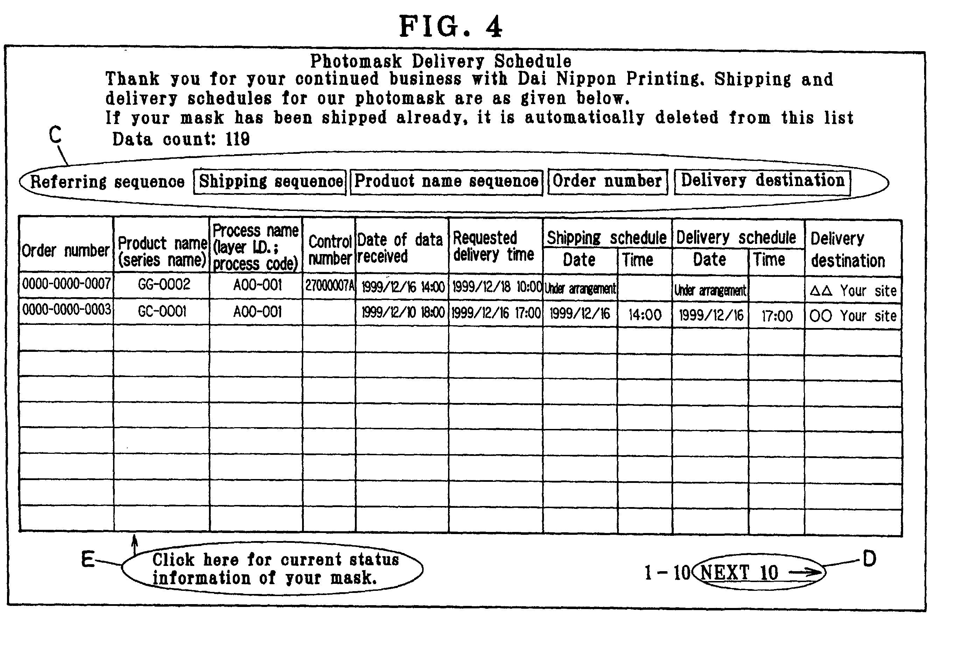

When the button "Search" is selected and clicked on the page of the photomask searching condition, the inputted searching condition and the instruction to search are sent to the server 11 by the browser device 5. Then, the server 11 carries out searching based on the designated searching condition, and a page showing the delivery time information on the photomask picked up as the result of searching is sent to the browser device 5. Fig. 4 shows an example of this page.

As shown in Fig. 4, delivery time information on the photomask picked up as the result of searching is displayed in the table for as many items as required. One line in this table corresponds to the delivery time information for one photomask. As the delivery time information, the information such as order number, product name, process name, control number, date of receiving of circuit pattern data, requested delivery date, scheduled shipping date, expected delivery date at the destination, and information on the destination are given for each photomask. In Fig. 4, the delivery time information is given on only two photomasks, while it is actually possible to display delivery time information for 10 photomasks in this case.

The number of items in the results of searching is displayed on this page. As shown by C in Fig. 4, four pushbuttons are provided for setting the referring sequence, i.e. "shipping sequence", "product name sequence", "order number", and "delivery destination". Therefore, by selecting and clicking the desired pushbutton, it is possible to display the referring sequence, i.e. shipping sequence, product sequence, the order number, or delivery destination. Also, as shown by D in Fig. 4, there is provided a clickable map "NEXT 10-". By selecting and clicking this clickable map, it is possible to find the delivery time information on the next 10 photomasks. Further, as shown by E in Fig. 4, by selecting and clicking the column of the product name in the delivery time information, it is possible to locate the desired photomask in the manufacturing process. This will be described in detail later.

Next, the information on current status of the photomask will be described. As the information on current status, two pages are provided: a page to briefly show the current in-process work, and a page indicating the details of the current status of one photomask.

When the person in charge on the purchaser side selects and clicks the clickable map of "photomask status information" on the front page shown in Fig. 2, the selected information is sent from the browser device 5 to the server 11. To cope with this, the server 11 transmits the picture of the page "photomask current status information" to the browser device 5 and indicates it. Prior to this, the person in charge on the purchaser side sends the picture of the page, which is useful to search and select the current status information of the photomask, which the person in charge on the purchaser side wants to see. This page is the same as the page shown in Fig. 3.

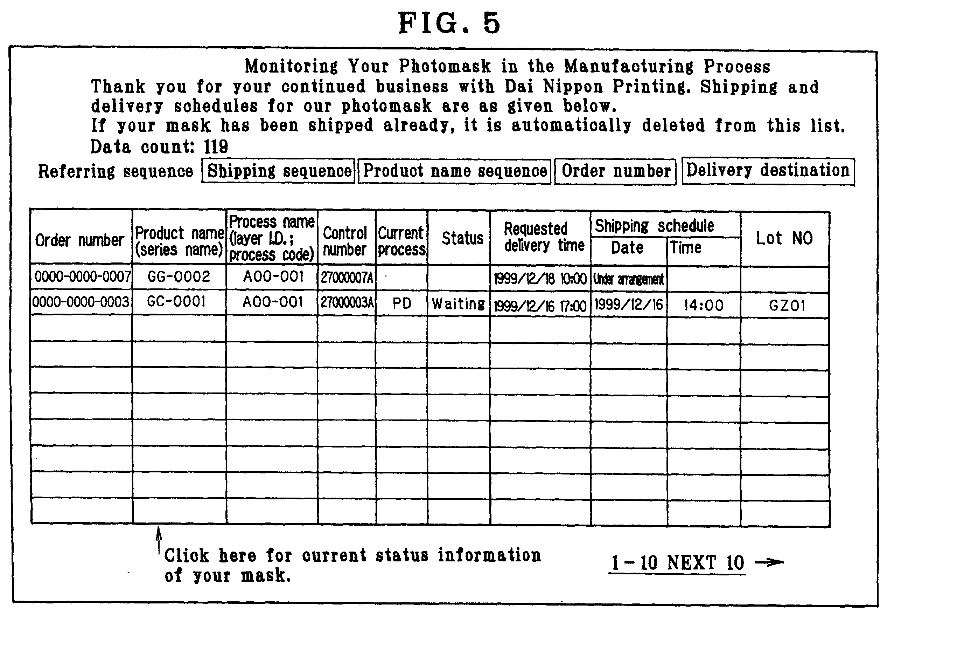

When the searching condition is set on the page of the photomask searching condition and the pushbutton "Search" is selected and clicked, the browser device 5 transmits the inputted searching condition and sends the instruction "Search" to the server 11. Then, the server 11 executes the searching based on the designated searching condition and transmits to the browser device 5 the page displaying the current status information of the photomask picked up as the result of searching. In this case, the page presented to the browser device 5 is the page displaying the information, which briefly indicates the current in-process work. Fig. 5 shows an example of a picture of this page.

As shown in Fig. 5, the in-process information on the photomask picked up as the result of searching is displayed in a table for as many items as desired. One line in this table corresponds to the in-process information for one photomask. For each of the photomasks, information such as order number, product name, process name, control number, current process, status, requested delivery date and time, scheduled shipping date and time, and lot number is indicated. By the information indicated on this page, it is possible to confirm which photomask is currently in which process and in which status. For instance, on the photomask at the second position from above in Fig. 5, it is found that the photomask is waiting for the fabrication of the process called "PD". "PD" is one of the inspection processes. Also, for instance, if the current process is "pellicle mounting" and the current status is in fabrication process, this means that the photomask is currently in the operation of pellicle mounting. In Fig. 5, in-process information is shown only for two photomasks. Actually, in this case, in-process information for 10 photomasks can be displayed.

Similarly to the page of the delivery time report shown in Fig. 4, the number of items in the result of searching is displayed on this page, and there are provided four pushbuttons for setting display sequence, i.e. "shipping sequence", "product name sequence", "order number", and "delivery destination". Further, by selecting and clicking the clickable map "NEXT 10-", in-process information on the next 10 photomasks can be displayed. Also, by selecting and clicking the column of "product name" in the in-process information, detailed current status information of any desired photomask can be seen.

As described above, the person in charge on the purchaser side can identify by this in-process page the information such as: which photomask is currently in which process and in which status. It is also possible to know the scheduled shipping date and time.

However, by this in-process page, it is not possible to know the details of the progress or current status on each individual photomask. For instance, it is the matter of deep concern for the person in charge on the purchaser side to know which inspection or correction is performed at which time and in which sequence, and which inspection will follow next. Specifically, if considerable correction has been made on the product, more time may be required for the inspection or the correction subsequently, and delay of delivery time can be predicted. If manufacture and inspection have been performed smoothly, the subsequent operation will proceed smoothly and the delivery time may be earlier than originally expected. Thus, it may be possible to rearrange and adjust the trial production line or the manufacturing line in advance.

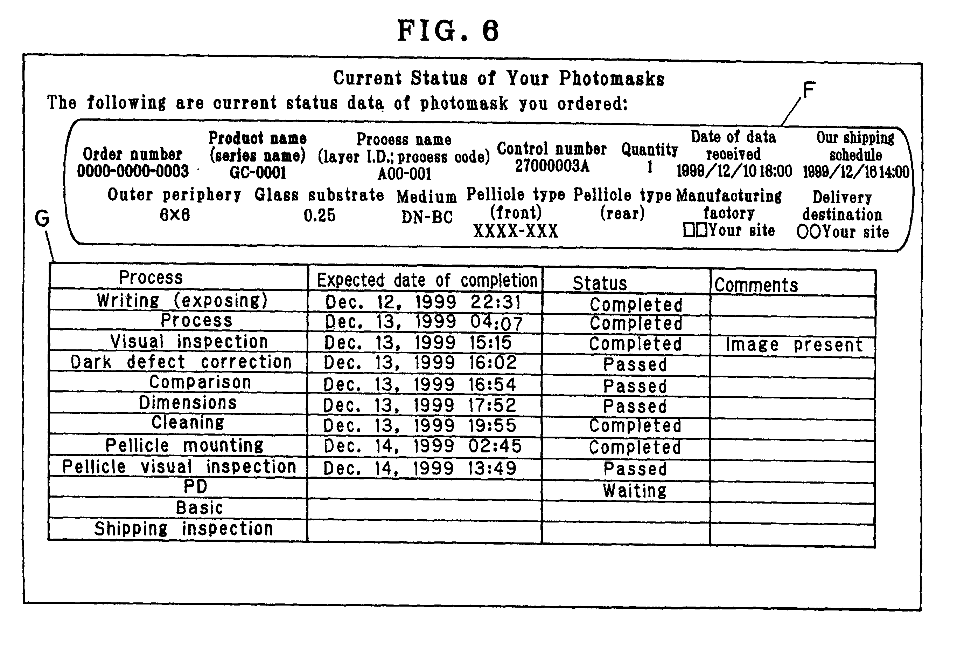

In this respect, in the present manufacturing status indicating system, by selecting the column of "product name" of the desired photomask on the page of delivery time report shown in Fig. 4 and the page of current in-process work shown in Fig. 5, the detailed current status information on the photomasks can be obtained.
Specifically, when the person in charge on the purchaser side selects and clicks the column of "product name" of a photomask on the page of delivery time report shown in Fig. 4 or on the page of current in-process work shown in Fig. 5, this selected information is sent from the browser device 5 to the server 11. Then, the server 11 transmits the detailed current status information of the selected photomask to the browser device 5. Fig. 6 shows an example of this page.

As shown in Fig. 6, on the page to indicate the detailed current status information, various specifications of the selected photomask are displayed in F of Fig. 6. Further, as shown in G of Fig. 6, the processes already completed and the subsequent processes are displayed as a table. For the process, which has been completed or in which the product passed the inspection, the word "completed" or "passed" is displayed in the column of the status. In the column of "time completed", the date of completion of this process is displayed. Based on this information, the person in charge on the purchaser side can identify current status information such as: which process has been performed at what time, how was the result, in which process it is now, and which process will be performed next. As a result, it is possible to estiamte the expected delivery time at the destination, and it is also possible to rearrange the trial production line or the manufacturing line in advance.

The following is a brief description on the processes shown in Fig. 6.

"Writing" or "exposing" is a process to write or depict a circuit pattern using an electron beam lithography device by coating resist on the glass substrate. This process is a process of photolithography, or more concretely, a process of etching. The process of "external view" or "visual inspection" is as described above.

In the process of "visual inspection", dark defect correction or white defect (illuminated defect) correction may be performed. When dark defect correction is performed, the process of dark defect correction is displayed as shown in Fig. 6. Dark defect correction is as described above. However, if dark defect correction is not needed, this process is not displayed. The same applies to white defect correction. Accordingly, for the photomask on the page of Fig. 6, a case is shown where no white defect correction was performed.

The process of "comparison" is as follows: As described above, layers are deposited one upon another based on the circuit pattern of several photomasks when semiconductor device is manufactured. Therefore, the function must be fulfilled correctly when a circuit pattern of a photomask is deposited on a circuit pattern of another photomask. In this respect, it is necessary to check whether it functions correctly when it is deposited on the circuit pattern of other photomask. This is a process called "comparison". Because this process is widely known, detailed description is not given here.

For "dimension", description has already given.

"Cleaning" is a process to clean up the produced photomask. "Pellicle mounting" is a process to mount pellicle. "Pellicle visual inspection" is a process to inspect whether or not dust or foreign particles are not intermingled after the pellicle mounting. "PD" is also a process to inspect whether there is dust or not. Basically, it is practiced to attach an inspection table of the photomask when the photomask is shipped, i.e. a table indicating whether glass substrate has defect or not, or whether product name is correct or not. This is a process to check whether the inspection table is attached to the photomask or not. "Shipping inspection" is a process to inspect whether there is abnormality in packing, or whether the product name indicated on the packing complies with product name of the photomask packed therein. When the shipping inspection is completed, the product is shipped.

In the column of "comments" of the process of visual inspection on the page, which indicates the detailed current status information, a pushbutton "image present" is provided. By pressing this button, the person in charge on the purchaser side can see and examine the image photographed in the process of visual inspection.

Specifically, the circuit pattern of photomask is complicated, and high accuracy is required. Therefore, even when it is examined in the process of visual inspection, it is difficult to decide whether the product is acceptable or not. Even when the person in charge of visual inspection decided it as acceptable, the product may be defective sometimes. For this reason, it is designed in such manner that the person in charge on the purchaser side can examine the image photographed in the process of visual inspection. Therefore, for the photomask, which finished visual inspection, the person in charge on the purchaser side can examine circuit pattern of the photomask before delivery and know exactly the status of the completed product. If there is any problem, it is possible to notify the order receiver by using the mailing function as described later. If there is no problem, the delivered product can be used without any anxiety. Therefore, this function also contributes to higher production efficiency.

When the person in charge on the purchaser side selects and clicks the pushbutton "image present" in the column of "comments" on the page of the current status information shown in Fig. 6 in the process of visual inspection, the selected information is sent from the browser device 5 to the server 11. Then, the server 11 transmits the image data photographed in the process of visual inspection on the photomask to the browser device 5. Upon receipt of the image data, the browser device 5 displays the image data on monitor. In so doing, the person in charge on the purchaser side can examine the image. If the pushbutton "image present" is not selected, the browser device 5 gives no action.

Next, description will be given on the shipping information of the photomask.

When the person in charge on the purchaser side selects and clicks the clickable map "Photomask shipping information" on the front page shown in Fig. 2, the selected information is sent from the browser device 5 to the server 11. Then, the server 11 offers a picture of a page, which is useful for the person in charge on the purchaser side to search and select the shipping information of the photomask.

When the searching conditions set on the page of the photomask searching condition and the pushbutton "Search" is selected and clicked, the browser device 5 sends the inputted searching condition and the instruction to search to the server 11. Then, the server 11 executes searching based on the designated searching condition, and a page indicating the shipping information of the photomask extracted as the result of searching is sent to the browser device 5. Fig. 7 shows an example of this page.

As shown in Fig. 7, the shipping information on the photomask extracted as the result of searching is displayed in a table for each item. One line in this table corresponds to the shipping information for one photomask. As the shipping information, data such as order number, product name, process name, control number, freight, request delivery time, scheduled shipping time, expected delivery time at the destination, delivery destination, and other comments are indicated for each photomask. The information on the freight indicates whether the product is shipped by regular freight or by special freight.
Similarly to the page of the report on delivery time shown in Fig. 4, number of items in the results of searching is indicated on this page, and four pushbuttons are provided to set the referring sequence such as "shipping sequence", "product name sequence", "order number", and "delivery destination". Further, when the clickable map "NEXT 10-" is selected and clicked, the shipping information on the next 10 photomasks can be displayed.

In the column of "comments" on the page to indicate the shipping information, two pushbuttons of "dimension" and "image" are provided. The pushbutton "image" is the same as the pushbutton "image present" in the column of the comments in the process of visual inspection on the page of the current status information shown in Fig. 6. By selecting and clicking the pushbutton "image", the person in charge on the purchaser side can see and examine the image photographed in the process of visual inspection.

Description will be given now on the pushbutton "dimension". This pushbutton "dimension" is used to obtain by downloading the data such as coordinate values and dimensions of each part of the circuit pattern measured in the process of "dimension" as described above.

Specifically, the photomask is generally used not for once, but it can be used repeatedly on mass production basis. In determining the exposure condition when the circuit pattern of photomask is exposed on silicon wafer, coordinate values or dimensional accuracy of each part of the photomask are important factors. In the past, products have been delivered with the inspection table showing these data. The purchaser acquires the coordinate values and dimensions via the information terminal and turns these to database. This makes it possible to satisfactorily determine the exposure condition based on the coordinate values and the dimensions of each part of the circuit pattern of photomask even in case of increased production. According to the conventional method, it is not possible to determine the exposure condition only after checking the inspection table attached to the delivered photomasks.

In contrast, if it is designed in such manner that the coordinate values and the dimensions of each part of the circuit pattern measured in the process of "dimension" can be obtained by downloading as described above, the purchaser side can determine the exposure condition prior to the delivery of the product. This makes it possible to carry out trial production or manufacture of the semiconductor devices more efficiently and without waste of time. Also, for the purchaser side, there is no need to manually input the coordinate values and dimensions from the inspection table as in the conventional method. As a result, the database can be easily built up, and this also contributes to the improvement of efficiency. For this reason, the pushbutton "dimension" is provided.

When the person in charge on the purchaser side selects and clicks the pushbutton "dimension" in the column of "comments" on the page of the shipping information as shown in Fig. 7, the selected information is set from the browser device 5 to the server 11. Then, the server 11 transmits to the browser device 5 the data such as coordinate values and dimensions inputted in the process of "dimension" for the photomask. As a result, the data is downloaded to the browser device 5. If the pushbutton "dimension" is not selected, the browser device 5 gives no action.

As described above, the person in charge on the purchaser side can exactly know from the information indicated on this page the data such as: at what time each photomask is shipped and is delivered to the destination. Accordingly, it is possible to rearrange the trial production line or the manufacture line. By selecting the pushbutton of "image" in the column of "comments", the person in charge can see and examine the image of the circuit pattern photographed in the process of visual inspection. By selecting the pushbutton "dimension", the data such as the coordinate values and dimensions inputted in the process of "dimension" can be obtained by downloading. In Fig. 7, only the shipping information for two photomasks is indicated, while it is possible to indicate the shipping information for 10 photomasks.

Next, description will be given on the mailing function.

As described above, according to the manufacturing status indicating system of the present invention, various types of information relating to the photomasks can be provided at real time for 24 hours to the purchaser. Therefore, the person in charge on the purchaser side may watch and see the delivery time information, the current status information or the shipping information and can give some instruction, can confirm or ask question to the person in charge on the order receiving side. If such instruction or question has to be sent via telephone or facsimile, it may not be very efficient compared with the method as intended by the present manufacturing status indicating system.

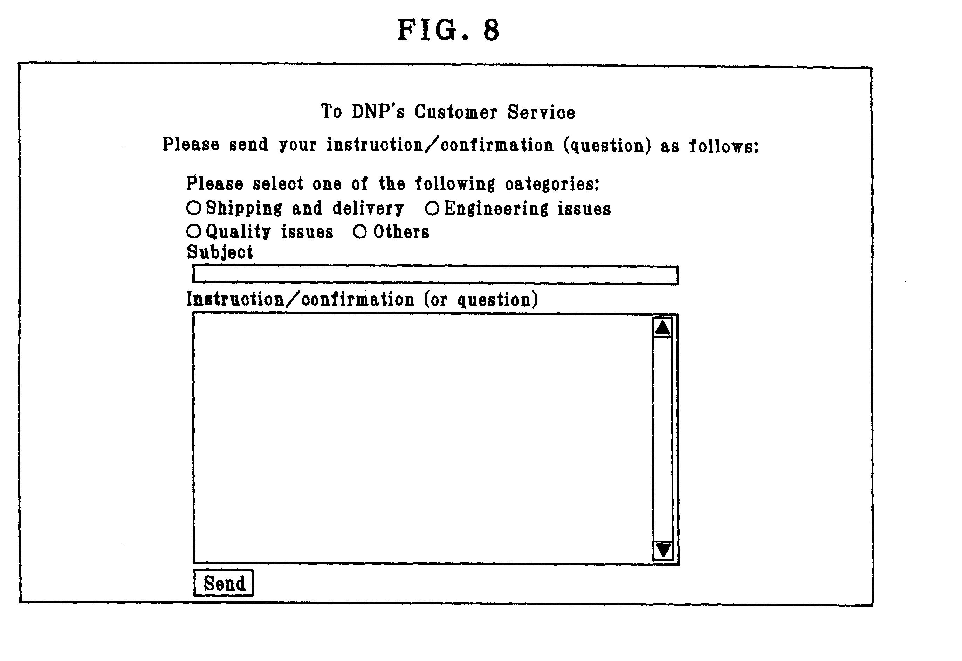

In this respect, in the manufacturing status indicating system of the present invention, the mailing function is provided so that the purchaser can give instruction, confirmation or ask question by this mailing function. Specifically, when the person in charge on the purchaser side selects and clicks the clickable map "Click here for instruction or confirmation" on the front page shown in Fig. 2, the selected information is sent from the browser device 5 to the server 11. Then, the server 11 transmits the page of the mailing function to the browser device 5. Fig. 8 shows an example of the page of the mailing function.

On the page shown in Fig. 8, four E-mail categories of "delivery time", "engineering", "quality" and "other matters" can be selected in radio box. By selecting the category in the radio box, item name is inputted to write in the E-mail. Then, by selecting and clicking the pushbutton for transmission, E-mail can be sent. The destination of E-mail will be the addresses as defined in the four categories.

The E-mail sent from the browser device 5 on the purchaser side is sent to DB 12 via the server 11. DB 12 delivers the E-mail to the host system 10. The host system 10 transmits the E-mail to the information terminal 30 at the address of destination attached to the E-mail. As a result, the person in charge on the order receiver side can receive the instruction, the confirmation, or the question sent from the person in charge on the purchaser side.

In the above, description has been given on a case where the manufacturing status indicating system of the present invention is applied to the presentation of the manufacturing status of photomasks, while the invention is not limited to the photomasks, and it is needless say that it can be applied to the presentation of the manufacturing status of various types of products.

### INDUSTRIAL APPLICABILITY

As described above, when the present manufacturing status indicating system is applied to the manufacture of photomasks, delivery time information, current status information and shipping information of the photomasks can be offered to the purchasers at all times and at real time. Compared with the conventional case where communication is made via telephone, facsimile, or E-mail, no discrepancy or crossing of communication occurs, and the person in charge on the purchaser side can obtain the information about the photomask at any time and when necessary.

Besides, according to the present manufacturing status indicating system, the person in charge on the purchaser side can accurately identify coordinate values and dimensions of each part of the circuit pattern measured or accurately identify the quality of the photomask prior to the delivery by the image of the circuit pattern. The conditions of the manufacturing line or exposure condition of the photomask can be rearranged in advance prior to the delivery. This makes it possible to eliminate waste of time and to contribute to the improvement of production efficiency.

## Claims

1. A manufacturing status indicating system, comprising a host system for turning data to database and for placing the data under control and storing data, said data being related to ordered products as inputted by an order receiving control system, a manufacture control system, and a process control system; and
a server for preparing pages to indicate information to be offered to a purchaser based on said database.

2. A manufacturing status indicating system according to claim 1, wherein said server is provided with authorization function to recognize an authorization key, and, when access is made from the browser device by using the authorization key, the server generates an information to be offered to a browser device as a home page based on elements contained in the authorization key.
